(19) **Europäisches Patentamt / European Patent Office / Office européen des brevets**

(11) **EP 2 847 598 B1**

(12) **EUROPEAN PATENT SPECIFICATION**

(45) Date of publication and mention of the grant of the patent:
**27.02.2019 Bulletin 2019/09**

(51) Int Cl.:
**G01N 35/10** (2006.01)    **B01L 3/00** (2006.01)

(21) Application number: **13721709.7**

(22) Date of filing: **07.05.2013**

(86) International application number:
**PCT/EP2013/059461**

(87) International publication number:
**WO 2013/167575 (14.11.2013 Gazette 2013/46)**

(54) **CARTRIDGE FOR DISPENSING A FLUID COMPRISING A REAGENT**

KARTUSCHE ZUR AUSGABE EINER FLÜSSIGKEIT MIT EINEM REAGENZ

CARTOUCHE POUR DISTRIBUER UN FLUIDE COMPRENANT UN RÉACTIF

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **08.05.2012 EP 12167111**

(43) Date of publication of application:
**18.03.2015 Bulletin 2015/12**

(73) Proprietors:
• **Roche Diagnostics GmbH**
  **68305 Mannheim (DE)**
  Designated Contracting States:
  **DE**
• **F. Hoffmann-La Roche AG**
  **4070 Basel (CH)**
  Designated Contracting States:
  **AL AT BE BG CH CY CZ DK EE ES FI FR GB GR HR HU IE IS IT LI LT LU LV MC MK MT NL NO PL PT RO RS SE SI SK SM TR**

(72) Inventors:
• **BRÜCKNER, Thorsten**
  **69198 Schriesheim (DE)**
• **KOLTAY, Peter**
  **79117 Freiburg (DE)**
• **ORANTH, Norbert**
  **79279 Voerstetten (DE)**
• **SPINKE, Jürgen**
  **64653 Lorsch (DE)**
• **TANGUY, Laurent**
  **13100 Aix en Provence (FR)**

(74) Representative: **Richardt Patentanwälte PartG mbB**
  **Wilhelmstraße 7**
  **65185 Wiesbaden (DE)**

(56) References cited:
**US-A- 5 078 970**      **US-A- 5 660 796**
**US-A1- 2010 015 009**      **US-A1- 2011 303 760**

**Description**

**Field of the invention**

The invention relates to the dispensing of fluids comprising a reagent, in particular cartridges for dispensing fluids.

**Background and related art**

In medical laboratories, in vitro diagnostics are commonly performed on biological samples. Such tests may be performed manually using pipettes or maybe performed using an automatic analyzer. Automatic analyzers may automatically add reagents to the biological sample and may measure one or more physical properties of the biological sample during analysis. Automatic analyzers are known in the prior art. For example, European patent EP 1 959 257 A2 discloses an automatic analyzer including a reagent cassette holding mechanism for holding a plurality of reagent cassettes.

International patent application publication WO 2007/122387 discloses a cartridge for dispensing a reagent contained in a reagent reservoir. The cartridge comprises a reservoir which defines an enclosed gas space above the reagent. The cartridge further includes a gas vent that admits, in use, gas to the gas space. The vent outlet is located at the base of the reservoir. The vent is placed as low as possible in the reservoir so that the volume of reagent which may be displaced at a constant head pressure is increased. WO 2007/122387 further discloses that the generation of bubbles at the vent outlet causes fluctuations in the reservoir pressure, with the pressure increasing at the moment at which the bubble is formed at the vent outlet. This effect is reduced by minimizing the volume of the gas space above the reagent.

United States patent application publication 2010/0015009 A1 discloses a cartridge for dispensing a reagent contained in a reagent reservoir. The reservoir is in fluid communication with a deformable dispense tube that is a least partially compressible, in use, to dispense a volume of reagent from the tube. The reservoir defines an enclosed gas space above the reagent, and the cartridge includes a gas vent that, in use, admits gas to the gas space in response to dispense of reagent from the tube that serves to control the reservoir pressure as the reservoir is depleted by subsequent dispensing of reagent. A dispenser employing the cartridge and a method of dispensing a volume of reagent are also disclosed.

**Summary**

The invention provides for a cartridge for dispending a fluid, an automatic analyzer, and a method of dispensing fluid with an automatic analyzer in the independent claims. Embodiments are given in the dependent claims.

In one aspect the invention provides for a cartridge for dispensing a fluid. The cartridge comprises a reservoir chamber for receiving the fluid. The reservoir chamber is also operable for receiving a ventilation gas. The reservoir chamber comprises an inlet for receiving the ventilation gas. There is also an outlet for dispensing a fluid from the reservoir. At least a portion of the reservoir chamber is operable for being filled with the ventilation gas when the cartridge is placed in an operating position. The inlet is located in the portion operable for being filled with the ventilation gas. The fluid comprises a reagent. The cartridge further comprises a baffle means for restricting gas diffusion through the inlet. The reservoir chamber receives the ventilation gas via the baffle means. Since the ventilation gas is provided directly to the gas within the reservoir, there is no bubble formation to cause variations of the pressure within the reservoir chamber. In this embodiment that baffle means provides the ventilation gas directly to the portion of the reservoir chamber operable for being filled with the ventilation gas. Embodiments of the invention may therefore have the advantage that there is always an equilibrium in pressure between outside of the cartridge and in the gas within the reservoir chamber. Embodiments of the invention may also have the advantage that the baffle means reduce the diffusion of gases into the reservoir chamber which may damage or degrade the fluid. The baffle means may also reduce evaporation of the fluid within the reservoir chamber because the diffusion of gas out of the reservoir chamber is also reduced.

A controller as used herein encompasses a device, machine, or apparatus for controlling the operation and/or function of one or more other devices. Examples of a controller may include, but are not limited to: a computer, a processor, an imbedded system or controller, a programmable logic controller, and a microcontroller. A 'computing device' or 'computer' as used herein encompasses to any device comprising a processor. A 'processor' as used herein encompasses an electronic component which is able to execute a program or machine executable instruction.

A 'computer-readable storage medium' as used herein encompasses any tangible storage medium which may store instructions which are executable by a processor of a computing device. The computer-readable storage medium may be referred to as a computer-readable non-transitory storage medium.

'Computer memory' or 'memory' is an example of a computer-readable storage medium. Computer memory is any memory which is directly accessible to a processor or other controller. 'Computer storage' or 'storage' is an example of a computer-readable storage medium. Computer storage is any non-volatile computer-readable storage medium.

A 'user interface' as used herein is an interface which allows a user or operator to interact with a computer or computer system.

A 'hardware interface' as used herein encompasses a interface which enables a processor or other controller to interact with and/or control an external computing device and/or apparatus. A hardware interface may allow a processor to send control signals or instructions to an external computing device and/or apparatus.

In one aspect the invention provides for a cartridge for dispensing a fluid. The cartridge comprises a reservoir chamber operable for receiving a fluid and for receiving a ventilation gas. A ventilation gas as used herein encompasses a gas which is used to equalize the pressure outside of the reservoir chamber and inside the reservoir chamber when fluid is removed from the reservoir chamber. The reservoir chamber comprises an inlet for receiving the ventilation gas and an outlet for dispensing the fluid. At least a portion of the reservoir chamber is operable for being filled with the ventilation gas when in an operating position. The inlet is located in the portion operable for being filled with the ventilation gas. In other words: When the cartridge is in an operating position, ventilation gas is added to the reservoir chamber at a location where there is already ventilation gas or which is immediately filled with the ventilation gas. The fluid comprises a reagent. A reagent as used herein is a substance or compound that is added to a chemical system in order to bring about a chemical or biochemical reaction or added to see if a reaction occurs.

The cartridge further comprises a baffle means for restricting gas diffusion through the inlet. The reservoir chamber is operable for receiving the ventilation gas via the baffle means. A baffle means as used herein encompasses a structure which causes gas to follow a particular path in order to reach the inlet. The baffle means provides a means of restricting the diffusion of gas in and/or out of the inlet. As such the gas diffusion as used herein may refer to the diffusion of ventilation gas into the cartridge and/or gas already present in the reservoir chamber from diffusing out. This embodiment may be advantageous because it may preserve the lifetime of the reagent within the cartridge. For instance depending upon the reagent constituents of the ventilation gas may cause the reagent to lose effectiveness or to lose its chemical reactivity; also gas inside the reservoir chamber may contain vapors from the fluid. The baffle means restricts the diffusion of the fluid vapor out of the inlet also. This may help to prevent the concentration of a particular reagent from changing.

In another embodiment the cartridge comprises a cap for sealing the inlet. The cap may be operable for being moved into an open position for opening the inlet. In some embodiments the cap may seal the inlet directly, that is the sealing effect of the cap is at the inlet. In other embodiments the cap seals the baffle or a portion of the baffle. This indirectly seals the inlet.

A cap as used herein may in some embodiments be a mechanical part operable to open or close the inlet. Examples of caps may include, a removable piece of plastic, a piece of tape, and a mechanical part which is operable to interlock with the cartridge such as a screw cap.

The inlet is operable for maintaining a constant pressure within the portion of the reservoir chamber that is operable for being filled with the ventilation gas. This is beneficial, because maintaining the pressure at a constant value enables more accurate dispensing of the fluid. In some embodiments the inlet is operable for maintaining a constant pressure within the portion of the reservoir chamber that is operable for being filled with the ventilation gas when dispensing fluid.

For example, in Unites States patent application publication US 2010/0015009 A1 an inlet which is submerged within the fluid is disclosed. Gas enters into the cartridge reservoir by bubbling at the inlet. This bubbling causes small variations within the reservoir. This may lead to inconstancies of the amount of fluid dispensed. Particularly if the amount of fluid is within a micro-fluidic range. Embodiments of the invention may provide for more accurate dispensing of fluid.

The inlet is operable for maintaining a constant pressure within the portion of the reservoir chamber that is operable for being filled with the ventilation gas when the reservoir chamber is between 10 and 90 percent full with the fluid, preferably between 20 and 80 percent full with the fluid. This
is beneficial, because maintaining the pressure at a constant value enables more accurate dispensing of the fluid.

In some examples the cartridge may comprise a filling inlet for filling the fluid into the reservoir chamber.

In some examples the ventilation gas may be normal atmospheric air. In some embodiments the baffle means is open to the atmosphere.

In another embodiment the cap is operable for being moved to an open position to open the inlet. The cap may be removable or may be movable but fixed to the cartridge.

In another example the cap is operable for being moved to a closed position. This for instance may be useful for re-sealing the inlet.

In another example the cap is operable for being moved from the open position to the closed position.

In another example the cam is operable for being moved from the closed position to the open position.

In another embodiment the cartridge comprises a cap for sealing the inlet. The cartridge is operable for forming at least a portion of the baffle means when the cap is open. This embodiment may be beneficial because removal of the cap placing the cap into an operating position forms a portion of the baffle means.

In another embodiment the cartridge comprises threads for attaching the cap. The baffle means comprises a diffusion path formed in the threads. For example the diffusion path could be a tube molded into the threads or a channel cut or molded on a surface of the threads. This embodiment may be beneficial because it may provide a cost effective means of providing the baffle means and integrating it into an existing structure.

In another embodiment the diffusion path is a channel in the threads. The cartridge further comprises a cap restraint for limiting the opening of the cap a predetermined amount. For example the cap and a portion of the cartridge may each have tabs or blocks on them. When the cap is open say a quarter or a half or three quarters turn it may prevent the cap from turning any further. This embodiment may be beneficial because it may provide a means of opening the threads a predetermined amount so that the diffusion along the channel is predictable and consistent between different cartridges.

In another embodiment the baffle means is at least partially formed on an exterior surface of the cartridge. This embodiment may be beneficial because it may provide a contact means of integrating a baffle means into a cartridge.

In another embodiment the baffle means comprises a tube mounted on the exterior surface.

In another embodiment the baffle means is at least partially formed within the reservoir chamber. This embodiment may be beneficial because the baffle means may be added to an existing cartridge or a baffle means may be tailored to a specific fluid. For instance some fluids may need a baffle means which restricts diffusion greater than another one in order to preserve the reagent.

In another embodiment the baffle means comprises a tube located at least partially within the reservoir chamber. This embodiment may be beneficial because the amount of tube within the reservoir chamber may be easily adjusted during manufacture of the cartridge.

In another embodiment the tube comprises an opening and the inlet. The opening may be directly open to the atmosphere or a gas supply. There may be a gas filter at the inlet.

The cap could for example be mounted with threads. When the cap is in a closed position, it pushes against and seals the inlet. When the cap is unscrewed it moves away from the inlet and opens it.

In another example the tube has a length-to-diameter ratio of at least 2.

In another example the tube has a length-to-diameter ratio of at least 100.

In another example at least part of the cartridge is injected molded. The baffle means is formed at least partially by the part.

In another embodiment the baffle means comprises a gas filter. The gas filter may be beneficial because in some embodiments it may help to further reduce diffusion through the inlet. In some embodiments the gas filter may have micro-pores to only let gas through. In some embodiments the filter may be hydrophobic. In other embodiments the gas filter may be: porous forms of polytetrafluoroethylene (PTFE), carbon fibers, carbon fibers coated with PTFE, polymer fibers, or fluoropolymer fibers.

This embodiment may be beneficial also from the aspect that the gas filter may help to keep the fluid within the reservoir chamber.

In another embodiment the cartridge further comprises the fluid.

In another example the fluid comprises a blood grouping reagent.

In another example the fluid comprises a diluent.

In another example the fluid comprises a solvent.

In another example the fluid comprises a catalyst.

In another example the fluid comprises an antibody.

In another example the fluid comprises an enzyme.

In another example the fluid comprises a recombinant protein.

In another example the fluid comprises a virus isolate.

In another example the fluid comprises a virus.

In another example the fluid comprises a biological reagent.

In another example the fluid comprises a protein.

In another example the fluid comprises a salt.

In another example the fluid comprises a detergent.

In another example the fluid comprises a nucleic acid.

In another example the fluid comprises an acid.

In another example the fluid comprises a base.

In another example the fluid comprises a dispersion. A dispersion as used herein encompasses particles or particulates suspended within the fluid.

In another example the fluid may comprise latex particles.

In another example the fluid may comprise nanoparticles.

In another example the fluid may comprise magnetic particles.

In another embodiment the cartridge further comprises a dispenser for dispensing the fluid. The dispenser is operable for receiving the fluid from the outlet. In some embodiments the dispenser may be a microfluidic dispenser. In other examples the dispenser may be or comprise a nozzle. For instance the dispenser may be or comprise a straight tube or it may be or comprise a nozzle with one or more valves contained within it.

In another embodiment the dispenser is operable to dispense fluid at a rate independent of the baffle means . In other words the dispensing of the fluid is not regulated or controlled by the baffle means.

For example in United States patent application US 2011/030760 A1 an apparatus for controllably releasing a substance is disclosed. A regulator element restricts the flow of gas into the apparatus and effectively controls the release rate of a fluid. In contrast embodiments of the invention may dispense fluid at a rate that is effectively independent of the baffle means. The baffle means may have such a small effect on the rate of dispensing that the effect is much smaller than the actual volume dispensed. This may enable more accurate dispensing of the fluid.

In another embodiment the dispenser is a micro-fluidic dispensing assembly.

In another example the dispenser is operable for dispensing any one of the following: volumes less than 10 $\mu$L, less than 500 nL, less than 200 nL, less than 100 nL, and less than 20 nL.

In another example the cap is attached to cartridge.

In another example the cap is operable to be removed from the cartridge.

In another example the cap is movable between an open position and a closed position, wherein when in the open position the cap opens the baffle means.

In another aspect the invention provides for an automatic analyzer for holding or receiving a cartridge according to an embodiment of the invention. The automatic analyzer comprises an actuator assembly operable for actuating the dispenser. The automatic analyzer further comprises a controller for controlling the operation of the actuator assembly.

The dispenser could be mechanically, pneumatically, magnetically, and/or electrically actuated. This is dependent upon the implementation and how the dispenser is constructed. In an embodiment the cartridge is in an operating position when installed into the automatic analyzer.

In another aspect the invention provides for a method of dispensing fluid with the automatic analyzer. The method comprises the step of providing a cartridge. The cartridge comprises a reservoir chamber. The reservoir chamber is filled with the fluid. The fluid comprises a reagent. The reservoir chamber comprises an inlet for receiving a ventilation gas and an outlet for dispensing the fluid. The cartridge further comprises a baffle means for restricting gas diffusion through the inlet. The cartridge further comprises a dispenser for dispensing the fluid. The method further comprises the step of installing the cartridge into an automatic analyzer in an operating position. The automatic analyzer comprises an actuator assembly for actuating the dispenser. The method further comprises the step of receiving the fluid from the outlet using the dispenser. The method further comprises the step of operating the actuator assembly to dispense the fluid. The method further comprises the step of receiving the ventilation gas via the baffle means at the inlet. The method further comprises the step of filling at least a portion of the reservoir chamber with the ventilation gas. The inlet is located in the portion operable for being filled with the ventilation gas.

In another example the method further comprises the step of removing a seal from the baffle means to provide air as the ventilation gas.

It is understood that one or more of the aforementioned embodiments of the invention may be combined as long as the combined embodiments are not mutually exclusive.

**Brief description of the drawings**

In the following embodiments of the invention are explained in greater detail, by way of example only, making reference to the drawings in which:

Fig. 1 illustrates a cartridge 100 according to an embodiment of the invention;
Fig. 2 illustrates an automatic analyzer 200 according to an embodiment of the invention;
Fig. 3 shows a flow diagram which illustrates a method according to an embodiment of the invention;
Fig. 4 illustrates a cartridge according to a further embodiment of the invention;
Fig. 5 further illustrates the cartridge shown in Fig. 4;
Fig. 6 illustrates a cartridge according to a further embodiment of the invention;
Fig. 7 further illustrates the cartridge shown in Fig. 6 providing an view onto the exterior surface of the cartridge shown in Fig. 6;
Fig. 8 illustrates a cartridge according to a further embodiment of the invention;
Fig. 9 further illustrates the cartridge shown in Fig. 8; and
Fig. 10 illustrates a cartridge according to a further embodiment of the invention.

**Detailed Description**

Like numbered elements in these figures are either equivalent elements or perform the same function. Elements which have been discussed previously will not necessarily be discussed in later figures if the function is equivalent.

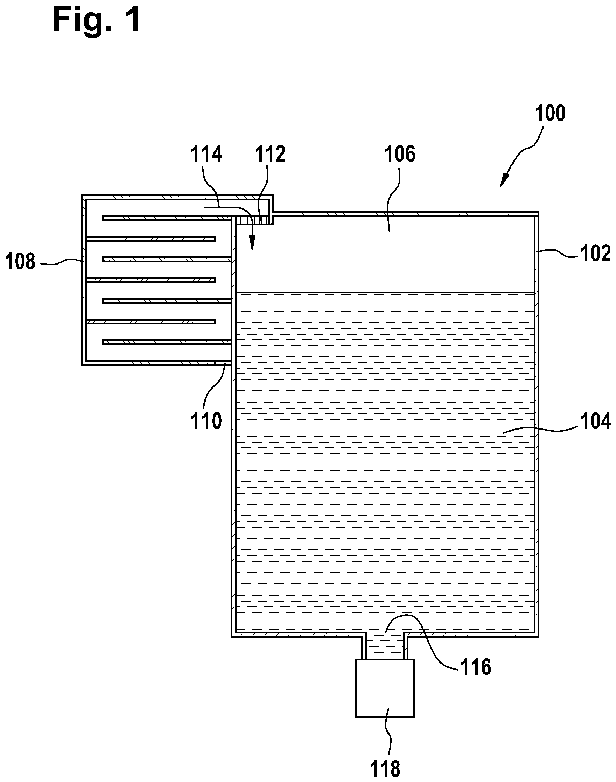

Fig. 1 illustrates a cartridge 100 according to an embodiment of the invention. The cartridge 100 comprises a reservoir chamber 102 for holding a fluid 104. The reservoir chamber 102 is only partially filled with the fluid 104. There is a region filled with gas 106 at the top of the reservoir chamber 102. Adjacent to the reservoir chamber 102 is a baffle means 108. The baffle means 108 in this example has a vent-to-atmosphere 110. Traveling through the baffle means there is an optional gas filter 112 which covers an inlet 114 to the reservoir chamber 102. The inlet 114 provides ventilation gas to the gas filled portion 106 of the reservoir chamber 102. The inlet 114 is attached to the baffle means 108. The fluid 104 exits the reservoir chamber 102 via an outlet 116. In this example there is an optional dispenser 118. The dispenser in this embodiment may either be a mechanism for pumping the fluid or it may simply be a nozzle or tube for dispensing the fluid.

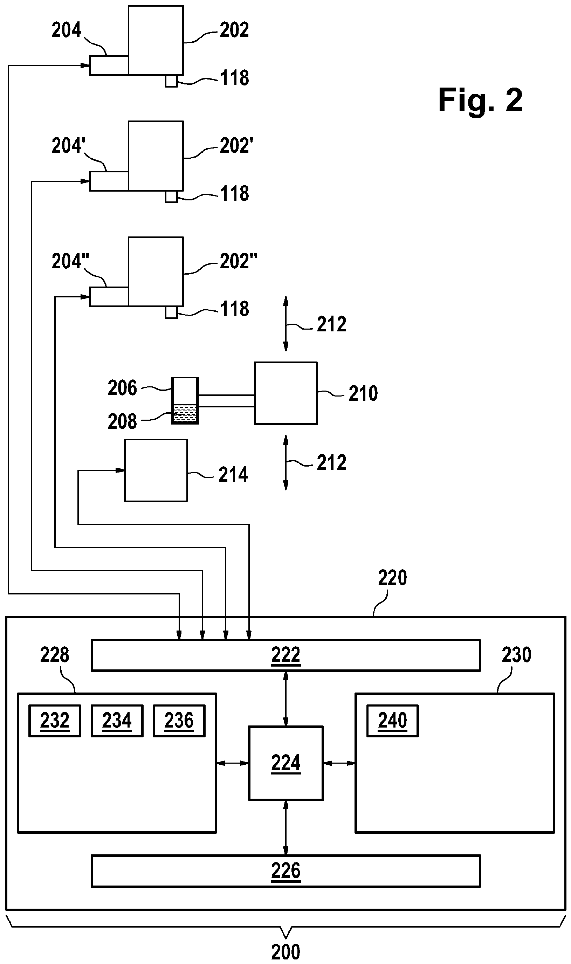

Fig. 2 illustrates an automatic analyzer 200 according to an embodiment of the invention. This automatic analyzer is shown as having three cartridges 202, 202' and 202". There is an actuator assembly 204 connected to cartridge 202. There is an actuator assembly 204' attached to cartridge 202'. There is an actuator assembly 204" attached to cartridge 202". The actuators 204, 204', 204" are for actuating the dispenser 118 of the cartridges 202, 202', 202". The automatic analyzer 200 is shown as having a relative movement means 210 which provides relative movement 212 between a sample holder 206 and the cartridges 202, 202' and 202". The sample holder 206 is shown as containing a biological sample 208. The cartridges 202, 202', 202" may be used to add one or more fluids to the biological sample 208. The automatic analyzer 200 may optionally comprise a measurement system 214. The measurement system may comprise one or more sensors for measuring a physical quantity or physical property of the biological sample 208. For example the measurement system 214 may comprise an NMR system, an optical transmission or reflectance measurement system, an electrochemical or optical sensor, a pH meter, a camera system or a chromatography system. The relative movement means 210 is also operable for moving the sample holder 206 to the measurement system 214.

The arrangement of the cartridges 202, 202', 202" and the measurement system 214 is representative. The measurement system 214 may be alternatively also a part of the sample holder 206. In some embodiments the sample holder 206 may remain in a fixed position and the cartridges 202, 202', 202" may move. The actuation systems 204, 204', 204" and the measurement system 214 are shown as being connected to a hardware interface 222 of a computer system 220. The computer system 220 functions as a controller for the automatic analyzer 200. The computer 220 is further shown as containing a processor 224 which is able to control the operation and function of the automatic analyzer 200 using the hardware interface 222. The processor 224 is shown as further being connected to a user interface 226, computer storage 228 and computer memory 230. The computer storage 228 is shown as containing an analysis request 232. The analysis request 232 contains a request to analyze the biological sample 208.

The computer storage 228 is shown as further containing sensor data 234 received from the measurement system 214. The computer storage 228 is shown as further containing an analysis result 236 which was determined using the sensor data 234. The computer memory 230 contains a control module 240. The control module 240 contains computer executable code which enables the processor 224 to control the operation and function of the automatic analyzer 200. For instance the control module 240 may use the analysis request 232 to generate commands to generate and send to the actuation systems 204, 204', 204", the measurement system 214 and the relative movement system 210. The control module 240 may also generate the analysis result 236 using the sensor data 234.

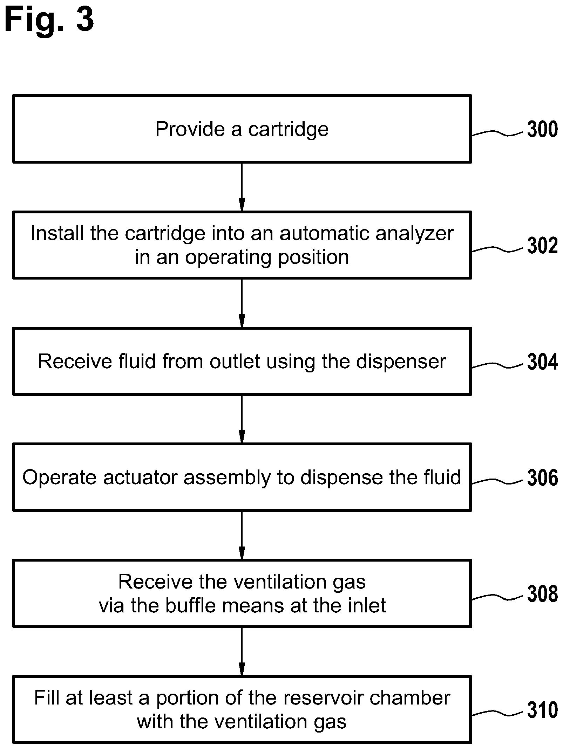

Fig. 3 shows a flow diagram which illustrates a method according to an embodiment of the invention. First in step 300 a cartridge is provided. Next in step 302 the cartridge is installed into an automatic analyzer and the cartridge is in an operating position. Next in step 304 fluid is dispense, i.e. received, from the outlet using the dispenser. Next in step 306 the actuator center is operated to dispense the fluid. Next in step 308 the ventilation gas is received via the baffle means at the inlet of the fluid reservoir. Finally in step 310 at least a portion of the reservoir chamber is filled with the ventilation gas.

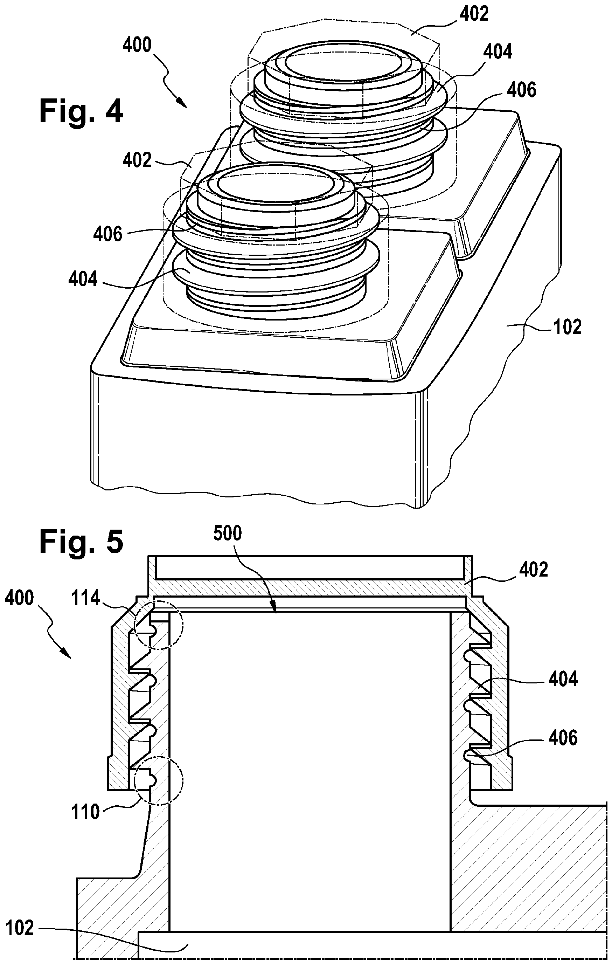

Figs. 4 and 5 show an alternative embodiment of a cartridge 400 according to the invention. In Figs. 4 and 5 two cartridges are integrated into a common housing. This cartridge 400 design has a cap 402 that is secured by threads 404. The reservoir chamber 102 is sealed by the cap 402. There are channels 406 cut or molded into the threads 404. When the cap 402 is open slightly, as is shown in Fig. 5 the channel 406 forms a vent-to-atmosphere 110. At the top of the threads 404 the gap between the cap 402 and the threads 404 forms the inlet 114. A gas filter may be stretched across the opening of the inlet 114 in some embodiments. The position is marked 500 in Fig. 5. When the cap 402 is closed the reservoir chamber 102 is sealed and the inlet 114 is closed. When the cap 402 is opened gas is able to diffuse into the channel 406. The amount the cap 402 is open may be controlled by placing a stop on the cap 402 and a corresponding stop on the reservoir chamber 102 to prevent the cap 402 from being opened too far.

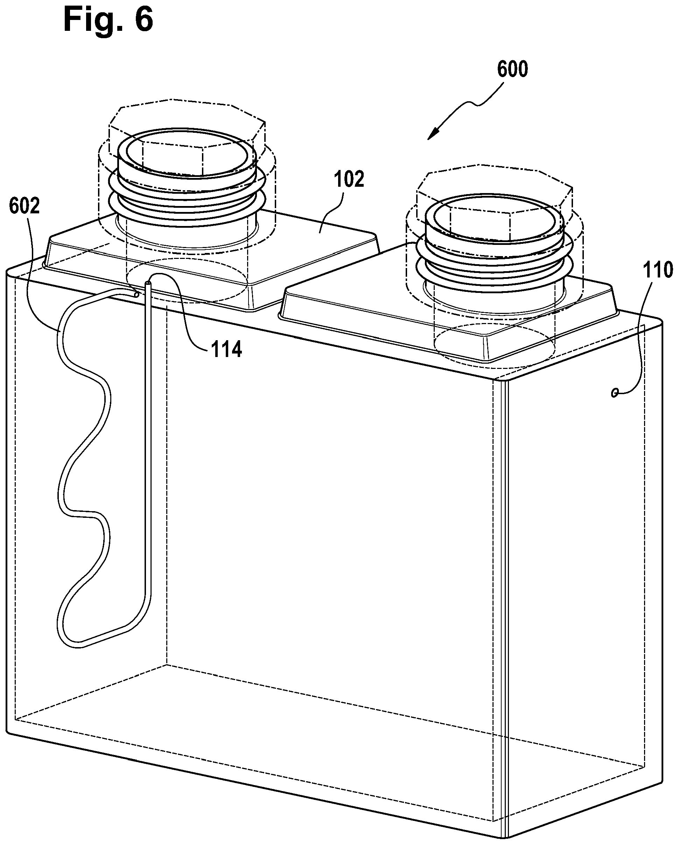

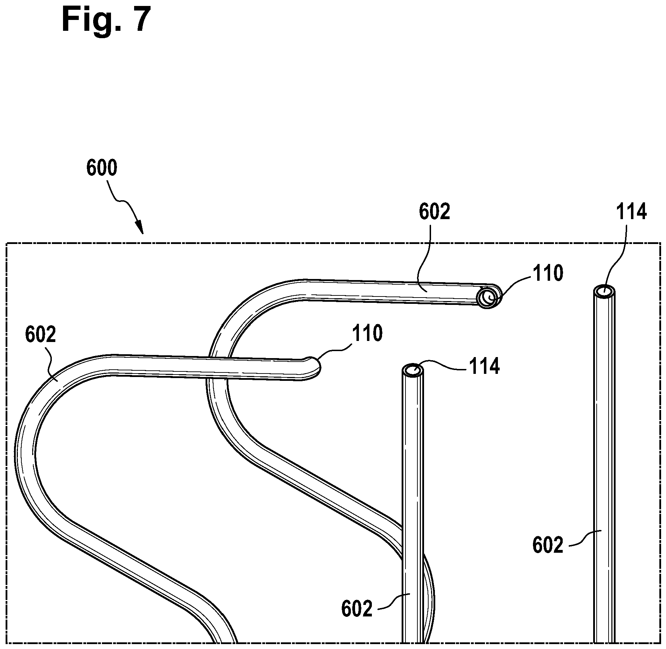

Figs. 6 and 7 illustrate a cartridge 600 according to a further embodiment of the invention. In Figs. 6 and 7 two cartridges are integrated into a common housing. In the embodiments shown in Figs. 6 and 7 a tube 602 that is either attached to the surface of the reservoir chamber 102 or is molded or partially molded into the reservoir chamber 102 is used. The tubes 602 have a vent-to-atmosphere 110 and follow an winding path on the outside of the cartridge 600. The tubes 602 are then connected to the inlet 114 of the reservoir chamber 102.

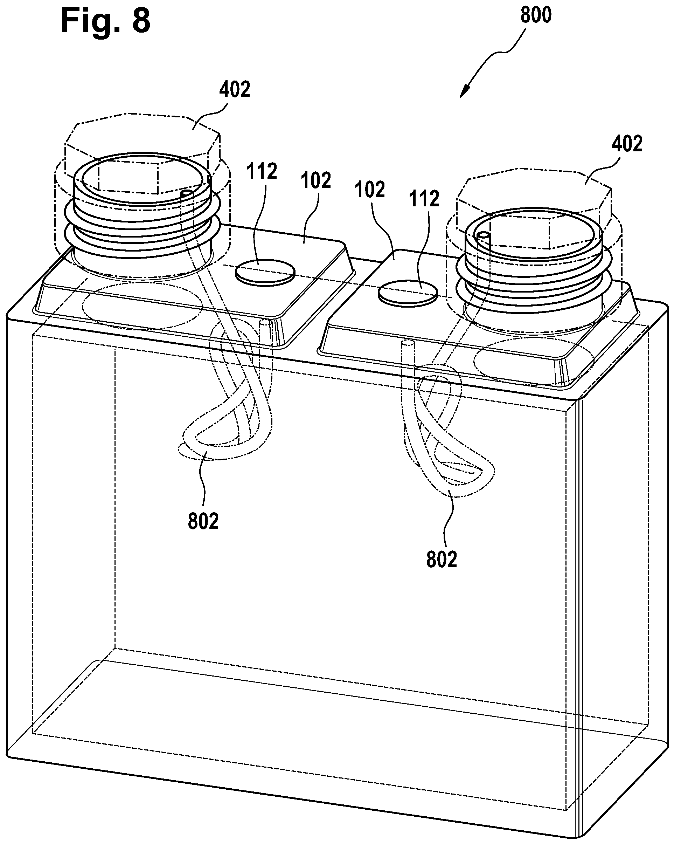

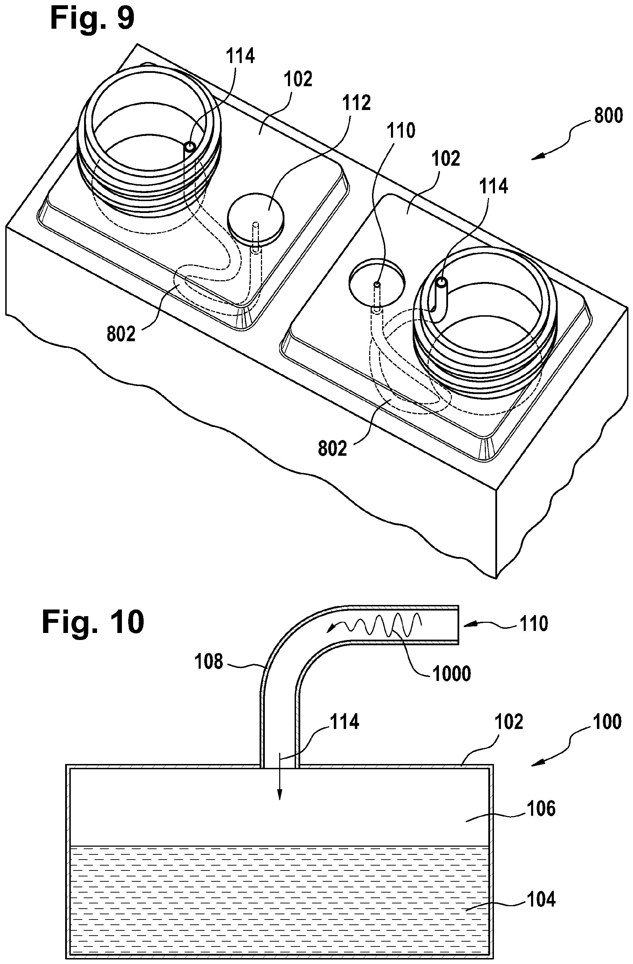

Figs. 8 and 9 illustrate a cartridge 800 according to a further embodiment of the invention. In Figs. 8 and 9 two cartridges are integrated into a common housing, In this example there is a gas filter 112 mounted at the entrance to a tube 802. The tube is located within the reservoir chamber 102. The tube extends up to the top of threads upon which a cap 402 is mounted. In this embodiment the gas filter 112 prevents fluid from leaving the cartridge 102 and also external particles or liquids, e.g., dust particles or droplets of condensed water, from entering and clogging the tube 802. Fig. 9 shows an example of the gas filter 112 removed on one of the cartridges 800. The caps 402 are also removed in Fig. 9. It can be seen how the inlets 114 are positioned in the reservoir chamber 102 at the highest point. The gas filters 112 prevent fluid from exiting the reservoir chamber 102.

Fig. 10 shows another example of a cartridge 100. This example is used to discuss the diffusion of gas into the cartridge 100. The cartridge 100 comprises a reservoir chamber 102 that is partially filled with fluid 104 and gas 106. The baffle means in this figure is represented by a tube 108. The baffle means 108 has a vent-to-atmosphere 110 and an inlet 114 which enters the reservoir chamber 102 in the gas filled region 106. The line marked 1000 represents a gas molecule diffusing through the baffle means 108 to the inlet 114.

The cartridge shown in Fig. 10 has both a gas and a liquid inside the reservoir chamber 102. Outside of the chamber are atmospheric conditions. These two regions are separated by a tube. The liquid in the cartridge can be progressively degraded by a molecules in the atmospheric gases. These molecules move from the surrounding environment to the inside of the cartridge by diffusion.

Calculations on how to define the tube diameter and length are detailed to demonstrate how to choose these parameters to prevent too fast destruction of the chemical properties of the liquid.
Basically the longer and the thinner the tube 108, the slower is the diffusion of the molecule 1000 inside the cartridge. A general parameter, herein referred to as the impedance, is defined and which is used to perform calculations which assure than the cartridge will be usable during a certain time if it is kept open in the same environment. Z is defined as the ratio between the concentration difference of the molecule 1000 across the channel and the molecule flux multiplied by the diffusion constant D of molecule 1000 diffusing in the cartridge.

This impedance can be easily calculated for long and round tube, and is used as reference.

In order to make such calculations it is necessary to define or determine the conditions under which the liquid is no more usable due to the contamination or degradation by molecule from the environment. There is therefore a quantity, Ncrit, which express the critical number of molecule 1000 which have diffused inside the reservoir. This quantity depends highly on several parameters such as on solubility, and on different chemical reaction parameters, such as, temperature or pressure.

Important variables to define, concentrations are in molecule/$m^3$:

- t_life : wished duration time of the reservoir
- C_0: concentration of this molecule in surrounding environment
- N_crit: critical number of particles inside the cartridge which should never be attained during the time t_life.
- V_cart: Total volume of the cartridge
- V_gas: Volume of gas in the cartridge
- C_gas_0: initial concentration of the molecule in the gas part of the reservoir.
- D: is the diffusion constant of the molecule at the considered conditions
- Z : geometry inductance
- For round and long homogenous tube

  ◦ L: length
  ◦ S: cross-section surface (= $\pi R^2$)

Z is defined as the ratio between the concentration difference across the channel and the molecule flux multiplied by the diffusion constant D.

For a simple round and long geometry, the maximum molecule flow from the outside to the inside can be defined in the steady-state approximation:

$$\varphi_{max} = \frac{SD}{L}(C_0 - C_{gas\_0}) \quad \text{(molecule/s)}$$

Therefore, by a simple integration, the maximum number of molecules in the cartridge at a time t, which have

diffused inside:

$$Nmax(t) = \frac{SD}{L}\left(C_0 - C_{gas_0}\right) * t \quad \text{(molecule)}$$

Then we can deduce that we need this inequality:

$$N_{crit} \geq N_{max}(t_{life}) = \frac{SD}{L}\left(C_0 - C_{gas_0}\right) * t_{life}$$

In a more general way:

$$Ncrit \geq N_{max}(t_{life}) \geq \frac{D}{Z}\left(C_0 - C_{gas_0}\right) * t_{life}$$

To ensure with certitude a lifetime greater than t for the liquid inside the reservoir, the impedance Z has to respect this formula

$$Z > D\frac{(C_0 - C_{gas\_0})t_{life}}{N_{crit}} = Zcrit$$

As written before, in the special case where the tubing is homogeneously round, Z can be defined by:

$$Z = \frac{L}{S}$$

Thus (for circular tubing):

$$\frac{L}{S} > D\frac{(C_0 - C_{gas\_0})t_{life}}{N_{crit}}$$

As long as the impedance Z of the tube is greater than Zcrit, the duration of the liquid and the cartridge is preserved for a minimal time t.

**Example: $CO_2$ in water**

- D = 0.16e-4 $m^2$/s
- V_cart = 30ml = 30e-6 $m^3$
- T_life = 1year = 365.25*24*3600 s
- $pCO_2$ = 4e-4*101325 (partial pressure of $CO_2$ in air)
- N_crit = N_crit_gas+N_crit_liq

    ○ N_crit_gas = Vgas*(Na*$pCO_2$)/(R*T)

        ▪ With Na = Avogadro constant, R = perfect gas constant and T = temperature.

    ○ N_crit_liq = Vliq*MaxConCO2

        ▪ This value is taken to be around 120mg/l, which is a lot more than for the N_crit_gas

The critical number of $CO_2$ molecules in gas is attained when the partial pressure in the gas volume is attained and $CO_2$ molecules are saturated in water (approx. double the number needed to saturate gas).

**- For one year stability:**

  ◦ Vliq = 29ml
  L = 100cm and D= 3.2mm
  L = 10cm and D = 1mm

  ◦ Vliq = 15ml
  L = 100cm and D= 2.3mm
  L = 10cm and D = 726$\mu$m

  ◦ Vliq = 1ml
  L = 100cm and D= 650$\mu$m
  L = 10cm and D = 205$\mu$m

Vliq is the volume of the liquid or fluid in the reservoir chamber. If length and diameter values of the tube are chosen so that the impedance is above these values then the cartridge will have the desired life time of one year. For instance, in one embodiment the baffle means comprises a tube with a length greater than or equal to 10 cm with a diameter equal to or less than 1mm. For a tube of 10cm in length with a diameter of 1 mm, $Z = 1.24e5$ m$^{-1}$. In one embodiment of the invention the impedance, as defined above, of the baffle means is less than or equal to 1. 24e5 m$^{-1}$. In this embodiment the fluid may be a creatinine test reagent.

Similarly, for 15ml of liquid in the reservoir chamber, with 1ml of gas in the cartridge, and considering CO2 diffusion, the length of the tube should be at least 10 cm with a diameter of less than or equal to 726$\mu$m. In one embodiment of the invention the impedance, as defined above, of the baffle means is less than or equal to $Z = 12.42e5$ m$^{-1}$. In this embodiment the fluid may be a creatinine test reagent.

List of reference numerals

| | |
|---|---|
| 100 | cartridge |
| 102 | reservoir chamber |
| 104 | fluid |
| 106 | gas |
| 108 | baffle means |
| 110 | vent to atmosphere |
| 112 | gas filter |
| 114 | inlet |
| 116 | outlet |
| 118 | dispenser |
| 200 | automatic analyzer |
| 202 | cartridge |
| 202' | cartridge |
| 202" | cartridge |
| 204 | actuator assembly |
| 204' | actuator assembly |
| 204" | actuator assembly |
| 206 | sample holder |
| 208 | biological sample |
| 210 | relative movement means |
| 212 | relative movement |
| 214 | measurement system |
| 220 | computer |
| 222 | hardware interface |

| 224 | processor |
|---|---|
| 226 | user interface |
| 228 | computer storage |
| 230 | computer memory |
| 232 | analysis request |
| 234 | sensor data |
| 236 | analysis result |
| 240 | control module |
| 400 | cartridge |
| 402 | cap |
| 404 | thread |
| 406 | channel in thread |
| 500 | gas filter location |
| 600 | cartridge |
| 602 | tube |
| 800 | cartridge |
| 802 | tube |
| 1000 | path of diffusion |

**Claims**

1. A cartridge (100, 202, 202', 202", 400, 600, 800) for dispensing a fluid (104), wherein the cartridge comprises:

   - a reservoir chamber (102) operable for receiving the fluid and for receiving a ventilation gas (106), wherein the reservoir chamber is partially filled with the fluid, wherein the reservoir chamber comprises an inlet (114) for receiving the ventilation gas and an outlet (116) for dispensing the fluid, wherein at least a portion (106) of the reservoir chamber is filled with the ventilation gas at the top of the reservoir chamber when in an operating position, wherein the fluid comprises a reagent,;
   - a baffle means (108, 406, 602, 802) for restricting gas diffusion through the inlet, wherein the reservoir chamber is operable for receiving the ventilation gas via the baffle means;

   **characterized in that**:

   the inlet is located in the portion filled with the ventilation gas to prevent bubble formation that causes variations of gas pressure within the reservoir chamber; and
   the inlet is operable for maintaining a constant gas pressure within the portion of the reservoir chamber that is operable for being filled with the ventilation gas when the reservoir chamber is between 10 percent and 90 percent, preferably between 20 percent and 80 percent, full with the fluid.

2. The cartridge of claim 1, wherein the dispenser is operable to dispense fluid at a rate independent of the baffle means .

3. The cartridge of claim 1 or 2, wherein the cartridge further comprises a cap (402) for sealing the inlet, wherein the cap is operable for being moved to an open position to open the inlet, wherein the cap is preferably operable for re-sealing the inlet.

4. The cartridge of claim 3, wherein the cartridge is operable for forming at least a portion of the baffle means when the cap is opened.

5. The cartridge of any one of claim 3 or 4, wherein the cartridge comprises threads for attaching the cap, and wherein the baffle means comprises a diffusion path formed in the threads, wherein the diffusion path preferably comprises a channel (406) in the threads, and wherein the cartridge preferably comprises a cap restraint for limiting the opening of the cap a predetermined amount.

6. The cartridge of claim 4 or 5, wherein the baffle means comprises a tube (802) located at least partially within the reservoir chamber, wherein the tube comprises an opening and the inlet, and wherein the cap is operable for sealing the inlet within the reservoir chamber.

7. The cartridge of any one of claim 1 or 2, wherein the baffle means comprises a tube (802) located at least partially within the reservoir chamber.

8. The cartridge of any one of the preceding claims, wherein the baffle means is at least partially formed on an exterior surface of the cartridge, and wherein wherein the baffle means preferably comprises a tube (602) mounted on the exterior surface.

9. The cartridge of any one of the preceding claims, wherein the baffle means is at least partially formed within the reservoir chamber.

10. The cartridge of any one of the preceding claims, wherein at least a part of the cartridge is injection molded, and wherein the baffle means is formed at least partially by the part.

11. The cartridge of any one of the preceding claims, wherein the baffle means comprises a gas filter (112, 500).

12. The cartridge of any one of the preceding claims, wherein the cartridge further comprises a dispenser (118) for dispensing the fluid, and wherein the dispenser is operable for receiving the fluid from the outlet.

13. The cartridge of any one of the preceding claims, wherein the dispenser is a micro-fluidic dispensing assembly.

14. An automatic analyzer (200) for analyzing a biological sample; wherein the automatic analyzer is operable for holding a cartridge (100, 202, 202', 202", 400, 600, 800) according to claim 12 or 13; wherein the automatic analyzer is operable for holding the cartridge in the operating position; wherein the automatic analyzer comprises an actuator assembly (204, 204', 204") operable for actuating the dispenser; and wherein the automatic analyzer further comprises a controller (220) for controlling the operation of the actuator assembly.

15. A method of dispensing fluid with an automatic analyzer, wherein the method comprises the steps of:

- providing (300) a cartridge (100, 202, 202', 202", 400, 600, 800) according to claim 12 or 13;
- installing (302) the cartridge into an automatic analyzer (200) in an operating position, wherein the automatic analyzer comprises an actuator assembly (204, 204', 204") for actuating the dispenser;
- receiving (304) the fluid from the outlet using the dispenser;
- operating (306) the actuator assembly to dispense the fluid;
- receiving (308) the ventilation gas via the baffle means at the inlet; and
- filling (310) at least a portion (102) of the reservoir chamber with the ventilation gas, wherein the inlet is located in the portion operable for being filled with the ventilation gas.


**Patentansprüche**

1. Kartusche (100, 202, 202', 202", 400, 600, 800) zur Ausgabe eines Fluids (104), wobei die Kartusche umfasst:

- eine Speicherkammer (102), die dafür ausgelegt ist, das Fluid aufzunehmen oder ein Belüftungsgas (106) aufzunehmen, wobei die Speicherkammer teilweise mit dem Fluid gefüllt ist, wobei die Speicherkammer einen Einlass (114) zur Aufnahme des Belüftungsgases und einen Auslass (116) zur Ausgabe des Fluids umfasst, wobei zumindest ein Teil (106) der Speicherkammer im oberen Teil der Speicherkammer mit dem Belüftungsgas gefüllt ist, wenn sie eine Betriebsposition einnimmt, wobei das Fluid ein Reagens umfasst;
- eine Umlenkeinrichtung (108, 406, 602, 802) zum Beschränken einer Gasdiffusion durch den Einlass, wobei die Speicherkammer dafür ausgelegt ist, das Belüftungsgas über die Umlenkeinrichtung aufzunehmen;

**dadurch gekennzeichnet, dass**:

der Einlass in dem Teil angeordnet ist, der mit dem Belüftungsgas gefüllt ist, um eine Blasenbildung zu verhindern, die Schwankungen eines Gasdrucks innerhalb der Speicherkammer bewirkt; und der Einlass dafür ausgelegt ist, einen konstanten Gasdruck innerhalb des Teils der Speicherkammer aufrechtzuerhalten, der dafür ausgelegt ist, mit dem Belüftungsgas gefüllt zu werden, wenn die Speicherkammer zwischen 10 Prozent und 90 Prozent, vorzugsweise zwischen 20 Prozent und 80 Prozent mit dem Fluid gefüllt ist.

**2.** Kartusche nach Anspruch 1, wobei die Ausgabeeinrichtung dafür ausgelegt ist, Fluid mit einer Rate auszugeben, die unabhängig ist von der Umlenkeinrichtung.

**3.** Kartusche nach Anspruch 1 oder 2, wobei die Kartusche ferner einen Deckel (402) zum Abdichten des Einlasses aufweist, wobei der Deckel dafür ausgelegt ist, in eine offene Stellung bewegt zu werden, um den Einlass zu öffnen, wobei der Deckel vorzugsweise zum Wiederabdichten des Einlasses ausgelegt ist.

**4.** Kartusche nach Anspruch 3, wobei die Kartusche dafür ausgelegt ist, zumindest einen Teil der Umlenkeinrichtung zu bilden, wenn der Deckel geöffnet ist.

**5.** Kartusche nach Anspruch 3 oder 4, wobei die Kartusche Gewinde zum Befestigen des Deckels aufweist, und wobei die Umlenkeinrichtung einen Diffusionsweg umfasst, der in den Gewinden ausgebildet ist, wobei der Diffusionsweg vorzugsweise einen Kanal (406) in den Gewinden umfasst, und wobei die Kartusche vorzugsweise eine Deckelhalterung zum Beschränken des Öffnens des Deckels über ein vorgegebenen Maß hinaus umfasst.

**6.** Kartusche nach Anspruch 4 oder 5, wobei die Umlenkeinrichtung ein Rohr (802) umfasst, das zumindest zum Teil innerhalb der Speicherkammer angeordnet ist, wobei das Rohr eine Öffnung und den Einlass umfasst, und wobei der Deckel dafür ausgelegt ist, den Einlass innerhalb der Speicherkammer abzudichten.

**7.** Kartusche nach Anspruch 1 oder 2, wobei die Umlenkeinrichtung ein Rohr (802) umfasst, das zumindest zum Teil innerhalb der Speicherkammer angeordnet ist.

**8.** Kartusche nach einem der vorangehenden Ansprüche, wobei die Umlenkeinrichtung zumindest zum Teil an einer Außenfläche der Kartusche ausgebildet ist, und wobei die Umlenkeinrichtung vorzugsweise ein Rohr (602) umfasst, das an der Außenfläche montiert ist.

**9.** Kartusche nach einem der vorangehenden Ansprüche, wobei die Umlenkeinrichtung zumindest zum Teil innerhalb der Speicherkammer ausgebildet ist.

**10.** Kartusche nach einem der vorangehenden Ansprüche, wobei zumindest ein Teil der Kartusche spritzgegossen ist, und wobei die Umlenkeinrichtung zumindest zum Teil von dem Teil gebildet wird.

**11.** Kartusche nach einem der vorangehenden Ansprüche, wobei die Umlenkeinrichtung ein Gasfilter (112, 500) umfasst.

**12.** Kartusche nach einem der vorangehenden Ansprüche, wobei die Kartusche ferner eine Ausgabeeinrichtung (118) zum Ausgeben des Fluids umfasst, und wobei die Ausgabeeinrichtung dafür ausgelegt ist, das Fluid aus dem Auslass aufzunehmen.

**13.** Kartusche nach einem der vorangehenden Ansprüche, wobei die Ausgabeeinrichtung eine mikrofluidische Ausgabebaugruppe ist.

**14.** Automatische Analyseeinrichtung (200) zum Analysieren einer biologischen Probe; wobei die automatische Analyseeinrichtung dafür ausgelegt ist, eine Kartusche (100, 202, 202', 202", 400, 600, 800) nach Anspruch 12 oder 13 zu halten; wobei die automatische Analyseeinrichtung dafür ausgelegt ist, die Kartusche in der Betriebsposition zu halten; wobei die automatische Analyseeinrichtung eine Stellantriebsbaugruppe (204, 204', 204") umfasst, die dafür ausgelegt ist, die Ausgabeeinrichtung zu betätigen; und wobei die automatische Analyseeinrichtung ferner eine Steuereinrichtung (220) zum Steuern des Betriebs der Stellantriebsbaugruppe umfasst.

**15.** Verfahren zum Ausgeben von Fluid mit einer automatischen Analyseeinrichtung, wobei das Verfahren die folgenden Schritte umfasst:

- Bereitstellen (300) einer Kartusche (100, 202, 202', 202", 400, 600, 800) nach Anspruch 12 oder 13;
- Installieren (302) der Kartusche in einer automatischen Analyseeinrichtung (200) in einer Betriebsposition, wobei die automatische Analyseeinrichtung eine Stellantriebsbaugruppe (204, 204', 204") zum Betätigen der Ausgabeeinrichtung umfasst;
- Aufnehmen (304) des Fluids aus dem Auslass unter Verwendung der Ausgabeeinrichtung;
- Betätigen (306) der Stellantriebsbaugruppe, um das Fluid auszugeben;
- Aufnehmen (308) des Belüftungsgases über die Umlenkeinrichtung am Einlass; und

- Befüllen (310) zumindest eines Teils (102) der Speicherkammer mit dem Belüftungsgas, wobei der Einlass in dem Teil angeordnet ist, der dafür ausgelegt ist, mit dem Belüftungsgas befüllt zu werden.

**Revendications**

1. Cartouche (100, 202, 202', 202", 400, 600, 800) destinée à distribuer un fluide (104), la cartouche comprenant :

   - une chambre de réservoir (102) pouvant être utilisée pour recevoir le fluide et pour recevoir un gaz de ventilation (106), où la chambre de réservoir est partiellement remplie avec le fluide, où la chambre de réservoir comprend une entrée (114) pour la réception du gaz de ventilation et une sortie (116) pour distribuer le fluide, où au moins une partie (106) de la chambre de réservoir est remplie avec le gaz de ventilation au niveau du dessus de la chambre de réservoir lorsqu'elle est en position de fonctionnement, où le fluide comprend un réactif ;
   - un système de déflecteur (108, 406, 602, 802) pour la restriction de la diffusion de gaz à travers l'entrée, où la chambre de réservoir peut être utilisée pour la réception du gaz de ventilation par le biais du système de déflecteur ;

   **caractérisée en ce que** :

   l'entrée est située dans la partie remplie avec le gaz de ventilation afin de prévenir la formation de bulles qui provoque des variations de pression du gaz dans la chambre de réservoir ; et
   l'entrée peut être utilisée pour le maintien d'une pression de gaz constante dans la partie de la chambre de réservoir qui peut être utilisée pour être remplie avec le gaz de ventilation lorsque la chambre de réservoir est remplie avec le fluide entre 10 pour cent et 90 pour cent, de préférence, entre 20 pour cent et 80 pour cent.

2. Cartouche selon la revendication 1, dans laquelle le dispositif de distribution peut être utilisé pour distribuer un fluide à un taux, indépendamment du système de déflecteur.

3. Cartouche selon la revendication 1 ou la revendication 2, où la cartouche comprend en outre un capuchon (402) pour fermer l'entrée, le capuchon pouvant être utilisé pour être déplacé vers une position ouverte afin d'ouvrir l'entrée, le capuchon pouvant de préférence être utilisé pour refermer l'entrée.

4. Cartouche selon la revendication 3, où la cartouche peut être utilisée pour former au moins une partie du système de déflecteur lorsque le capuchon est ouvert.

5. Cartouche selon l'une quelconque des revendications 3 ou 4, où la cartouche comprend des fils pour attacher le capuchon et où le système de déflecteur comprend un chemin de diffusion formé dans les fils, où le chemin de diffusion comprend de préférence un canal (406) dans les fils et où la cartouche comprend de préférence une retenue de capuchon pour la limitation de l'ouverture du capuchon d'une grandeur prédéterminée.

6. Cartouche selon la revendication 4 ou la revendication 5, dans laquelle le système de déflecteur comprend un tube (802) situé au moins partiellement à l'intérieur de la chambre de réservoir, où le tube comprend une ouverture et une entrée et où le capuchon peut être utilisé pour fermer l'entrée à l'intérieur de la chambre de réservoir.

7. Cartouche selon l'une quelconque des revendications 1 ou 2, dans laquelle le système de déflecteur comprend un tube (802) situé au moins partiellement à l'intérieur de la chambre de réservoir.

8. Cartouche selon l'une quelconque des revendications précédentes, dans laquelle le système de déflecteur est au moins partiellement formé sur une surface extérieure de la cartouche, et dans laquelle le système de déflecteur comprend de préférence un tube (602) monté sur la surface extérieure.

9. Cartouche selon l'une quelconque des revendications précédentes, dans laquelle le système de déflecteur est au moins partiellement formé dans la chambre de réservoir.

10. Cartouche selon l'une quelconque des revendications précédentes, dans laquelle au moins une partie de la cartouche est moulée par injection, et dans laquelle le système de déflecteur est formé au moins partiellement par la partie.

11. Cartouche selon l'une quelconque des revendications précédentes, dans laquelle le système de déflecteur comprend un filtre à gaz (112, 500).

12. Cartouche selon l'une quelconque des revendications précédentes, où la cartouche comprend en outre un dispositif de distribution (118) pour distribuer le fluide, et où le dispositif de distribution peut être utilisé pour la réception du fluide à partir de la sortie.

13. Cartouche selon l'une quelconque des revendications précédentes, dans laquelle le dispositif de distribution est un ensemble de distribution microfluidique.

14. Analyseur automatique (200) pour l'analyse d'un échantillon biologique ; l'analyseur automatique pouvant être utilisé pour tenir une cartouche (100, 202, 202', 202", 400, 600, 800) selon la revendication 12 ou la revendication 13 ; l'analyseur automatique pouvant être utilisé pour tenir la cartouche dans la position de fonctionnement ; l'analyseur automatique comprenant un ensemble d'actionnement (204, 204', 204") pouvant être utilisé pour actionner le dispositif de distribution ; et où l'analyseur automatique comprend en outre un dispositif de commande (220) pour la commande du fonctionnement de l'ensemble d'actionnement.

15. Procédé de distribution d'un fluide avec un analyseur automatique, où le procédé comprend les étapes :

- de mise à disposition (300) d'une cartouche (100, 202, 202', 202", 400, 600, 800) selon la revendication 12 ou la revendication 13 ;
- d'installation (302) de la cartouche dans un analyseur automatique (200) dans une position de fonctionnement, l'analyseur automatique comprenant un ensemble d'actionnement (204, 204', 204") pour l'actionnement du dispositif de distribution ;
- de réception (304) du fluide à partir de la sortie en utilisant le dispositif de distribution ;
- de mise en oeuvre (306) de l'ensemble d'actionnement pour distribuer le fluide ;
- de réception (308) du gaz de ventilation par le biais du système de déflecteur au niveau de l'entrée ; et
- de remplissage (310) d'au moins une partie (102) de la chambre de réservoir avec le gaz de ventilation, l'entrée étant située dans la partie pouvant être utilisée pour être remplie avec le gaz de ventilation.

# Fig. 1

EP 2 847 598 B1

Fig. 2

16

# Fig. 3

| | |
|---|---|
| Provide a cartridge | 300 |

↓

| | |
|---|---|
| Install the cartridge into an automatic analyzer in an operating position | 302 |

↓

| | |
|---|---|
| Receive fluid from outlet using the dispenser | 304 |

↓

| | |
|---|---|
| Operate actuator assembly to dispense the fluid | 306 |

↓

| | |
|---|---|
| Receive the ventilation gas via the buffle means at the inlet | 308 |

↓

| | |
|---|---|
| Fill at least a portion of the reservoir chamber with the ventilation gas | 310 |

**Fig. 4**

400

402

404

406

402

406

404

102

**Fig. 5**

500

402

400

114

404

110

406

102

# Fig. 6

# Fig. 7

**Fig. 8**

# Fig. 9

# Fig. 10

**EP 2 847 598 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- EP 1959257 A2
- WO 2007122387 A
- US 20100015009 A1
- US 2011030760 A1